(19) Europäisches Patentamt
European Patent Office
Office européen des brevets

(11) **EP 3 640 075 B1**

(12) **EUROPEAN PATENT SPECIFICATION**

(45) Date of publication and mention
of the grant of the patent:
**21.08.2024 Bulletin 2024/34**

(21) Application number: **17913804.5**

(22) Date of filing: **13.06.2017**

(51) International Patent Classification (IPC):
**B60L 3/00** *(2019.01)* **B60L 3/04** *(2006.01)*
**B60L 50/14** *(2019.01)* **B60L 50/16** *(2019.01)*
**B60L 58/24** *(2019.01)* **B60L 58/12** *(2019.01)*

(52) Cooperative Patent Classification (CPC):
**B60L 3/00; B60L 3/0023; B60L 3/003;**
**B60L 3/0046; B60L 3/0092; B60L 3/04;**
**B60L 50/14; B60L 50/16; B60L 58/12; B60L 58/24;**
B60L 2200/26; B60L 2220/16; Y02T 10/62;
Y02T 10/70; Y02T 10/7072; (Cont.)

(86) International application number:
**PCT/JP2017/021795**

(87) International publication number:
**WO 2018/229863 (20.12.2018 Gazette 2018/51)**

(54) **RAILROAD VEHICLE**

SCHIENENFAHRZEUG

VÉHICULE FERROVIAIRE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**22.04.2020 Bulletin 2020/17**

(73) Proprietors:
• **Kabushiki Kaisha Toshiba**
**Minato-ku**
**Tokyo 105-8001 (JP)**
• **Toshiba Infrastructure Systems &**
**Solutions Corporation**
**Kawasaki-shi, Kanagawa 212-8585 (JP)**

(72) Inventors:
• **KONDO, Atsumi**
**Tokyo 105-8001 (JP)**
• **YAMAZAKI, Osamu**
**Tokyo 105-8001 (JP)**
• **KUWANO, Yuuki**
**Tokyo 105-8001 (JP)**
• **HAGIWARA, Keizo**
**Tokyo 105-8001 (JP)**

(74) Representative: **AWA Sweden AB**
**Junkersgatan 1**
**582 35 Linköping (SE)**

(56) References cited:
EP-A1- 2 113 410     EP-A1- 2 883 740
EP-A1- 3 000 646     EP-A1- 3 048 001
WO-A1-2013/021486    WO-A1-2013/021486
WO-A1-2015/001621    JP-A- 2008 206 300
JP-A- 2014 113 008    JP-A- 2014 113 008
JP-A- 2016 135 030

(52) Cooperative Patent Classification (CPC): (Cont.)
Y02T 10/72

# Description

[Technical Field]

An embodiment of the present invention relates to a railroad vehicle.

[Background Art]

In the related art, in addition to railroad vehicles which travel by receiving electricity supplied from an overhead wire, railroad vehicles which travel by using electricity generated by a generator or travel by using electricity stored in a storage battery are known. In railroad vehicles which do not receive electricity supplied from an overhead wire, when an abnormality has occurred in a part of an in-vehicle electrical system, there is concern that electricity may not be able to be supplied to a motor and shunt traveling may not be able to be performed.

EP 2883740 relates to a propulsion control device of an engine hybrid railroad vehicle.

[Citation List]

[Patent Literature]

[Patent Literature 1]
Japanese Unexamined Patent Application, First Publication No. 2014-90554
[Patent Literature 2]
Japanese Unexamined Patent Application, First Publication No. 2014-91504

[Summary of Invention]

[Technical Problem]

A problem to be solved by the present invention is to provide a railroad vehicle which can more continuously travel when an abnormality of an electrical system occurs.

[Solution to Problem]

According to an embodiment, there is provided a railroad vehicle including a first storage battery unit, a first DC-DC converter, a first DC-AC converter, a first motor, a first DC link, a second storage battery unit, a second DC-DC converter, a second DC-AC converter, a second motor, a second DC link, a third DC link, and a controller. The first DC-DC converter is connected to the first storage battery unit. The first DC-AC converter converts a direct current into an alternating current. The first motor outputs a driving force to a wheel using an alternating current supplied from the first DC-AC converter.

The first DC link connects the first DC-DC converter and the first DC-AC converter to each other, and a first switch is provided therein. The second DC-DC converter is connected to the second storage battery unit. The second DC-AC converter converts a direct current into an alternating current. The second motor outputs a driving force to the wheel using an alternating current supplied from the second DC-AC converter. The second DC link connects the second DC-DC converter and the second DC-AC converter to each other, and a second switch is provided therein. The third DC link connects a place between the first switch and the first DC-AC converter in the first DC link and a place between the second switch and the second DC-AC converter in the second DC link, and a third switch is provided therein. The controller controls the first DC-DC converter such that a voltage of the first DC link approximates a target voltage and controls the second DC-DC converter such that a voltage of the second DC link approximates the target voltage; causes the first switch and the second switch to be in a conduction state when no abnormality has occurred in the first storage battery unit, the first DC-DC converter, the second storage battery unit, and the second DC-DC converter; causes the first switch to be in a cut-off state and causes the second switch and the third switch to be in a conduction state when an abnormality has occurred in the first storage battery unit or the first DC-DC converter; and causes the second switch to be in a cut-off state and causes the first switch and the third switch to be in a conduction state when an abnormality has occurred in the second storage battery unit or the second DC-DC converter.

[Brief Description of Drawings]

Fig. 1 is a schematic view of a railroad vehicle 1 of an embodiment.
Fig. 2 is a constitution diagram of a railroad vehicle electricity supply system 10 mounted in the railroad vehicle 1 of the first embodiment.
Fig. 3 is a functional constitution diagram of a controller 50.
Fig. 4 is a view illustrating an example of a map for deriving a predetermined load torque.
Fig. 5 is a view illustrating details of switch control and converter control for each state based on determination results of an abnormality determiner 55.
Fig. 6 is a view illustrating an electricity supply path in an ordinary state.
Fig. 7 is a view illustrating an electricity supply path when an abnormality has occurred in a storage battery unit 22A or a DC-DC converter 24A and no abnormality has occurred in a storage battery unit 22B and a DC-DC converter 24B.
Fig. 8 is a view illustrating an electricity supply path when no abnormality has occurred in the storage battery unit 22A and the DC-DC converter 24A and an abnormality has occurred in the storage battery unit 22B or the DC-DC converter 24B.

Fig. 9 is a view illustrating an electricity supply path when an abnormality has occurred in the storage battery unit 22A or the DC-DC converter 24A and an abnormality has occurred in the storage battery unit 22B or the DC-DC converter 24B.

Fig. 10 is a constitution diagram of a railroad vehicle electricity supply system 10A mounted in a railroad vehicle of a second embodiment.

Fig. 11 is a constitution diagram of a railroad vehicle electricity supply system 10B mounted in a railroad vehicle of a third embodiment.

Fig. 12 is a view illustrating details of switch control and converter control for each state based on determination results of the abnormality determiner 55 according to the third embodiment.

Fig. 13 is a constitution diagram of a railroad vehicle electricity supply system 10C mounted in a railroad vehicle according to the fourth embodiment.

[Description of Embodiments]

Hereinafter, railroad vehicles of embodiments will be described with reference to the drawings.

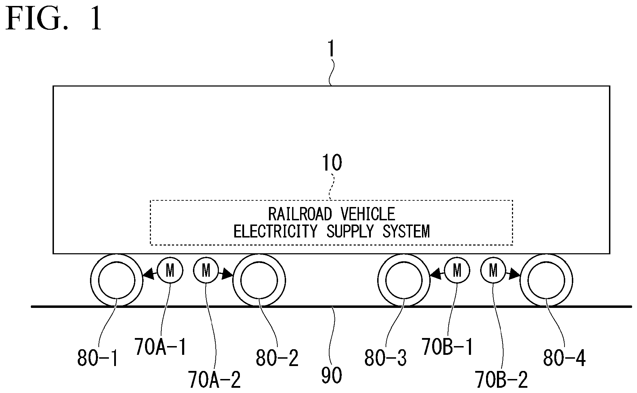

Fig. 1 is a schematic view of a railroad vehicle 1 of an embodiment. For example, the railroad vehicle 1 is a vehicle which travels on a railroad track without receiving electricity supplied from an overhead wire. In the railroad vehicle 1, motors 70A-1, 70A-2, 70B-1, and 70B-2 which are interlocked with axles of wheels 80-1, 80-2, 80-3, and 80-4 and respectively drive the wheels are mounted. In addition, in the railroad vehicle 1, a railroad vehicle electricity supply system 10 which supplies alternating current electricity to the motors 70A-1, 70A-2, 70B-1, and 70B-2 is mounted. Hereinafter, when the motors are not distinguished from each other, they will be simply referred to as motors 70, and when the wheels are not distinguished from each other, they will be simply referred to as wheels 80. For example, the motor 70 is a permanent magnet motor. However, it is not limited thereto, and an induction motor such as a synchronous reluctance motor may be adopted. Constituent elements of the railroad vehicle electricity supply system 10 may be mounted in an underfloor part of the railroad vehicle 1 or may be mounted inside a cabin. In addition, the number and the combinations of the motors 70 and the wheels 80 illustrated in Fig. 1 are merely examples and may vary in any form. One or both of the motors 70A-1 and 70A-2 are examples of a first motor, and one or both of the motors 70B-1 and 70B-2 are examples of a second motor.

(First embodiment)

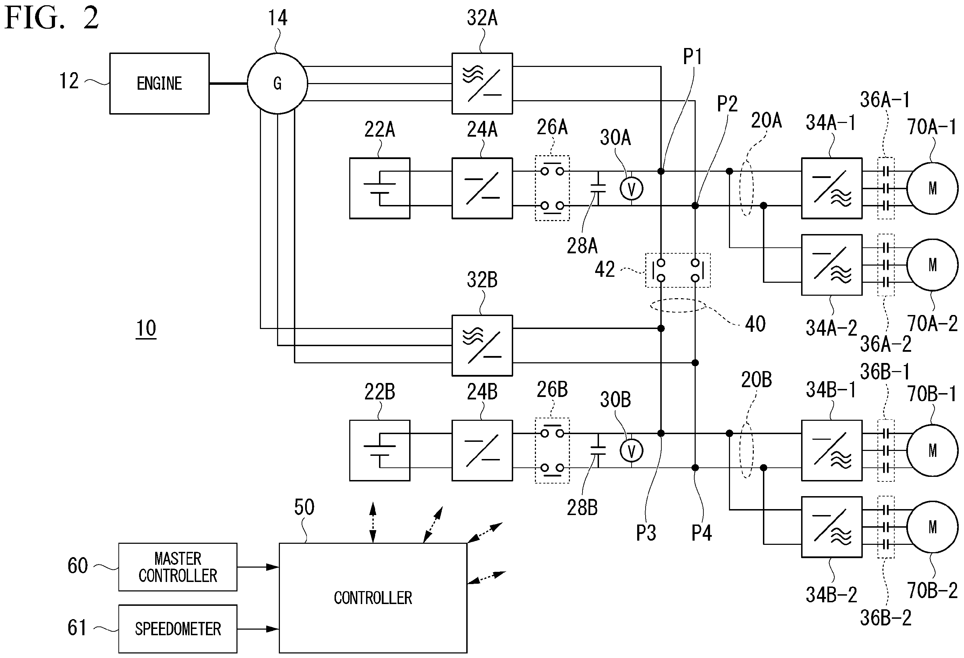

Fig. 2 is a constitution diagram of the railroad vehicle electricity supply system 10 mounted in the railroad vehicle 1 of a first embodiment. In the first embodiment, the motor 70 is a permanent magnet motor. For example, the railroad vehicle electricity supply system 10 includes an engine 12, a generator 14, a first DC link 20A and an instrument connected thereto, a second DC link 20B and an instrument connected thereto, and a third DC link 40. An apparatus realized by excluding the engine 12 and the generator 14 from the railroad vehicle electricity supply system 10 may be referred to as a railroad vehicle electricity conversion apparatus.

The engine 12 is an internal combustion engine (for example, a diesel engine) which outputs power through combustion of fuel. For example, the engine 12 is controlled to be operated at a predetermined rotation frequency regardless of a load torque. The generator 14 generates alternating current electricity using power output by the engine 12. For example, the generator 14 outputs three-phase alternating current electricity.

[Constitution on first DC link side]

Instruments such as a storage battery unit 22A, a DC-DC converter 24A, a first switch 26A, a smoothing capacitor 28A, a voltage sensor 30A, an AC-DC converter (converter) 32A, and DC-AC converters (inverters) 34A-1 and 34A-2 are connected to the first DC link 20A. The storage battery unit 22A is an example of a first storage battery unit, the DC-DC converter 24A is an example of a first DC-DC converter, the AC-DC converter 32A is an example of a first AC-DC converter, and the DC-AC converters 34A-1 and 34A-2 are examples of a first DC-AC converter.

The storage battery unit 22A includes instruments such as a storage battery (lithium-ion battery or the like), a charging circuit, a voltage sensor, a current sensor, a thermometer, and a battery management unit (BMU) calculating a state of charge (SOC) based on detection values thereof.

For example, the DC-DC converter 24A is a DC-DC chopper. The DC-DC converter 24A performs voltage conversion between the storage battery unit 22A side and the DC-AC converters 34A-1 and 34A-2 side. The DC-DC converter 24A is operated such that the voltage of the first DC link 20A is maintained at a constant value.

The smoothing capacitor 28A smooths the voltage of the first DC link 20A. The voltage sensor 30A measures the voltage of the first DC link 20A and outputs the measured voltage to a controller 50.

The AC-DC converter 32A converts electricity of a three-phase alternating current generated by the generator 14 into a direct current and outputs the converted current to the first DC link 20A side.

For example, the DC-AC converter 34A-1 internally includes a plurality of switching elements. The DC-AC converter 34A-1 converts a direct current supplied via the first DC link 20A into a three-phase alternating current and supplies the converted current to the motor 70A-1. A contactor 36A-1 is provided between the DC-AC converter 34A-1 and the motor 70A-1. Similarly, the DC-AC converter 34A-2 converts a direct current supplied via the first DC link 20A into a three-phase alternating current and supplies the converted current to the motor 70A-2. A contactor 36A-2 is provided between the DC-AC converter 34A-2 and the motor 70A-2. The contactors 36A-1 and 36A-2 are controlled by the controller 50 such that they are in a cut-off state when the wheels 80-1 and 80-2 rotate in a state where the motors 70A-1 and 70A-2 are not driven, for example, when the railroad vehicle 1 is towed by another vehicle, or when the railroad vehicle 1 performs shunt traveling and stops.

[Constitution on second DC link side]

Instruments such as a storage battery unit 22B, a DC-DC converter 24B, a first switch 26B, a smoothing capacitor 28B, a voltage sensor 30B, an AC-DC converter (converter) 32B, and DC-AC converters (inverters) 34B-1 and 34B-2 are connected to the second DC link 20B. The storage battery unit 22B is an example of a second storage battery unit, the DC-DC converter 24B is an example of a second DC-DC converter, the AC-DC converter 32B is an example of a second AC-DC converter, and the DC-AC converters 34B-1 and 34B-2 are examples of a second DC-AC converter.

The storage battery unit 22B includes instruments such as a storage battery (lithium-ion battery or the like), a charging circuit, a voltage sensor, a current sensor, a thermometer, and a BMU calculating a state of charge based on detection values thereof.

For example, the DC-DC converter 24B is a DC-DC chopper. The DC-DC converter 24B performs voltage conversion between the storage battery unit 22B side and the DC-AC converters 34B-1 and 34B-2 side. The DC-DC converter 24B is operated such that the voltage of the second DC link 20B is maintained at a constant value.

The smoothing capacitor 28B smooths the voltage of the second DC link 20B. The voltage sensor 30A measures the voltage of the second DC link 20B and outputs the measured voltage to the controller 50.

The AC-DC converter 32B converts electricity of a three-phase alternating current generated by the generator 14 into a direct current and outputs the converted current to the second DC link 20B side.

For example, the DC-AC converter 34B-1 internally includes a plurality of switching elements. The DC-AC converter 34B-1 converts a direct current supplied via the second DC link 20B into a three-phase alternating current and supplies the converted current to the motor 70B-1. A contactor 36B-1 is provided between the DC-AC converter 34B-1 and the motor 70B-1. Similarly, the DC-AC converter 34B-2 converts a direct current supplied via the second DC link 20B into a three-phase alternating current and supplies the converted current to the motor 70B-2. A contactor 36B-2 is provided between the DC-AC converter 34B-2 and the motor 70B-2. The contactors 36B-1 and 36B-2 are controlled by the controller 50 such that they are in a cut-off state when the wheels 80-3 and 80-4 rotate in a state where the motors 70B-1 and 70B-2 are not driven, for example, when the railroad vehicle 1 is towed by another vehicle, or when the railroad vehicle 1 performs shunt traveling and stops.

[Third DC link]

The third DC link 40 connects places P1 and P2 between the first switch 26A and the DC-AC converters 34A-1 and 34A-2 in the first DC link 20A and places P3 and P4 between a second switch 26B and the DC-AC converters 34B-1 and 34B-2 in the second DC link 20B. A third switch 42 is provided in the third DC link 40.

The first switch 26A, the second switch 26B, the third switch 42, and the contactors 36A-1, 36A-2, 36B-1, and 36B-2 are contactors (electromagnetic contactors), for example.

Hereinafter, when the constitutions are not distinguished from each other by the DC link side, they will be described by suitably omitting the reference signs "A", "B", "A-1", "B-1", and the like indicating the DC link side of the constitution.

[Controller]

The controller 50 controls the entirety of the railroad vehicle electricity supply system 10. Information such as an instruction signal from a master controller 60 and a speed measurement value from a speedometer 61 is input to the controller 50.

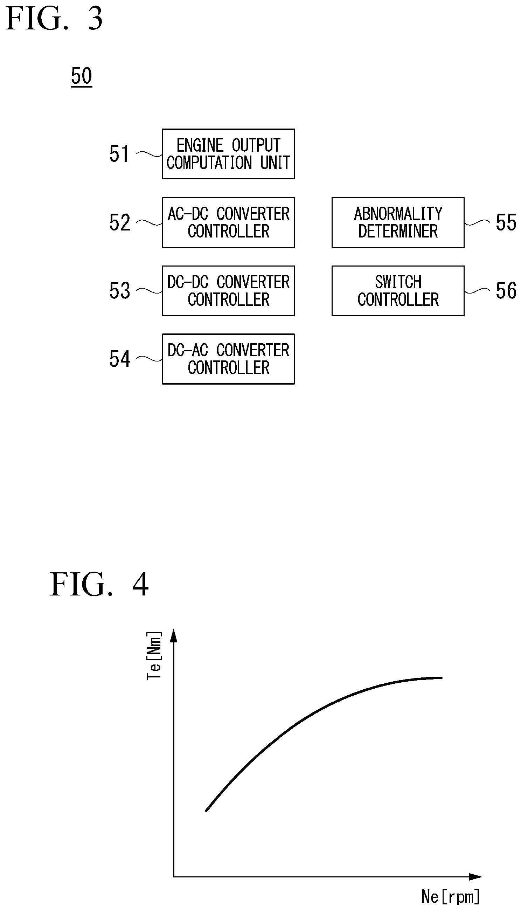

Fig. 3 is a functional constitution diagram of the controller 50. For example, the controller 50 includes an engine output computation unit 51, an AC-DC converter controller 52, a DC-DC converter controller 53, a DC-AC converter controller 54, an abnormality determiner 55, and a switch controller 56. For example, each of these controllers is realized by one or more hardware processors executing a program. In addition, some or all of these controllers may be realized by hardware such as a large scale integration (LSI), an application specific integrated circuit (ASIC), or a field-programmable gate array (FPGA) or may be realized by software and hardware in cooperation. The controller 50 may perform distributed processing using a plurality of hardware processors, LSIs, ASICs, FPGAs, or the like. In this case, the controller 50 may have a plurality of constitutions which are separate bodies, and some or all thereof may be installed near an instrument which is a control target or may be accommodated inside the same casing.

For example, the engine output computation unit 51 controls the engine 12 such that it is operated at a predetermined rotation frequency Ne. The predetermined rotation frequency Ne is a rotation frequency at which the engine 12 can be operated with favorable energy efficiency in combination with a predetermined load torque Te. The engine output computation unit 51 outputs a determined rotation frequency to a control device (not illustrated) of the engine 12. The engine output computation unit 51 performs control such that the sum of an output of the engine 12 and outputs of the storage battery units 22A and 22B becomes required power determined based on an instruction signal from the master controller 60 and a speed measurement value from the speedometer 61. When a charge/discharge limitation caused by the SOC, the temperature, or the like occurs in the storage battery unit 22A or 22B, the engine output computation unit 51 may raise or lower the predetermined rotation frequency Ne such that the limitation is satisfied.

The AC-DC converter controller 52 causes an AC-DC converter 32 to execute any control described below, for example.

(1) Torque control

In this case, the AC-DC converter controller 52 controls the AC-DC converter 32 such that a predetermined load torque is applied to the engine 12. The predetermined load torque is a torque for operating the engine 12 at an operation point at which energy efficiency becomes favorable. Fig. 4 is a view illustrating an example of a map for deriving the predetermined load torque. As illustrated in the diagram, this map is a map in which the predetermined load torque Te is associated with the rotation frequency Ne of the engine 12. The AC-DC converter controller 52 acquires the rotation frequency Ne of the engine 12 at the time of control and derives the predetermined load torque Te with reference to the map. Processing of deriving the predetermined load torque Te with reference to the map may be performed by the engine output computation unit 51.

(2) DC link voltage control

In this case, the AC-DC converter controller 52 instructs the AC-DC converter 32A to constantly maintain the voltage of the first DC link 20A and/or instructs the AC-DC converter 32B to constantly maintain the voltage of the second DC link 20B. For example, details of DC link voltage control are simply expressed by Expression (1). In the expression, Kp1 indicates a gain of a proportional term, V# indicates a target voltage for the first DC link 20A or the second DC link 20B, V indicates a voltage measured by the voltage sensor 30A or 30B, and Ki1 indicates a gain of an integration term. That is, control in a second mode is feedback control (PI control) in which the voltage V approximates the target voltage V#. In place of PI control, the AC-DC converter controller 52 may perform PID control or feedback control in another form.

$$\Delta Te = Kp1(V\# - V) + Ki1\!\int(V\# - V)dt \ ... \ (1)$$

The DC-DC converter controller 53 controls the DC-DC converters 24A and 24B. The DC-DC converter controller 53 instructs the DC-DC converter 24A to constantly maintain the voltage of the first DC link 20A and instructs the DC-DC converter 24B to constantly maintain the voltage of the second DC link 20B. Hereinafter, similar to control performed by the AC-DC converter controller 52, there are cases where control performed by the DC-DC converter controller 53 is referred to as "DC link voltage control". For example, details of DC link voltage control by the DC-DC converter controller 53 are simply expressed by Expression (2). In the expression, D indicates a duty ratio applied to each of the DC-DC converters 24, Kp2 indicates a gain of a proportional term, and Ki2 indicates a gain of an integration term, that is, control performed by the DC-DC converter controller 53 is feedback control (PI control) in which the voltage V approximates the target voltage V#. In place of PI control, the DC-DC converter controller 53 may perform PID control or feedback control in another form.

$$\Delta D = Kp2(V\# - V) + Ki2\!\int(V\# - V)dt \ ... \ (2)$$

The DC-AC converter controller 54 controls each of the DC-AC converters 34. For example, the DC-AC converter controller 54 determines a target torque to be output by each of the motors 70 based on the number of notches input from the master controller 60 and the speed of the railroad vehicle 1 input from the speedometer 61. The DC-AC converter controller 54 determines control information applied to the DC-AC converters 34 based on the determined target torque. Each of the DC-AC converters 34 supplies a three-phase alternating current to the motor 70 based on the input control information. Consequently, the motors 70 output driving forces, so that the railroad vehicle 1 can travel. For example, when the foregoing control information is determined, vector control computation, V/F control computation, or the like is performed based on at least a two-phase current value of a three-phase alternating current. However, detailed description thereof will be omitted.

The abnormality determiner 55 determines whether or not an abnormality has occurred in a monitoring target instrument of the railroad vehicle electricity supply system 10. The monitoring target instrument includes at least the storage battery unit 22A, the DC-DC converter 24A, the storage battery unit 22B, and the DC-DC converter 24B. For example, the abnormality determiner 55 determines whether or not an abnormality has occurred in the monitoring target instrument based on the presence or absence and the details of a response to a signal transmitted to the monitoring target instrument, regularly transmitted existence confirmation signals, output control signals, or the like. In addition, the abnormality determiner 55 may determine whether or not an abnormality has occurred in the monitoring target instrument based on the voltage or the current in each unit of the railroad vehicle electricity supply system 10. For example, when there is no response to a signal transmitted to the monitoring target instrument, the abnormality determiner 55 determines that an abnormality has occurred in the monitoring target instrument. In addition, when existence confirmation signals regularly transmitted from the monitoring target instrument cease, the abnormality determiner 55 may determine that an abnormality has occurred in the monitoring target instrument. In addition, when a control signal output from the monitoring target instrument indicates an abnormal value, the abnormality determiner 55 may determine that an abnormality has occurred in the monitoring target instrument. In addition, when a value indicated by a voltage or a current in each unit of the railroad vehicle electricity supply system 10 is an abnormal value, the abnormality determiner 55 may determine that an abnormality has occurred in the monitoring target instrument.

The switch controller 56 controls each of the first switch 26A, the second switch 26B, and the third switch 42 such that it is in a conduction state or a cut-off state based on the state of the monitoring target instrument based on determination results of the abnormality determiner 55.

[Control for each state]

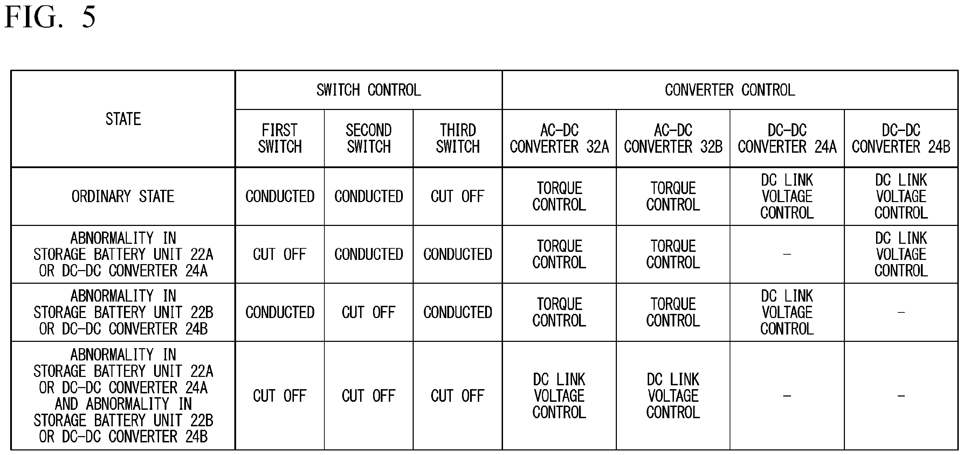

Fig. 5 is a view illustrating details of switch control and converter control for each state based on the determination results of the abnormality determiner 55. When the abnormality determiner 55 determines that no abnormality has occurred in any of the storage battery unit 22A, the DC-DC converter 24A, the storage battery unit 22B, and the DC-DC converter 24B (in a case of an ordinary state), the switch controller 56 causes the first switch 26A and the second switch 26B to be in a conduction state and causes the third switch 42 to be in a cut-off state. In an ordinary state, the third switch 42 may be caused to be in a conduction state. However, in this case, it is conceivable that current imbalance, voltage disturbance, or the like occurs between the first DC link 20A and the second DC link 20B. In order to prevent this, it is assumed that feedback control for equalizing currents output by the converters is added or diodes for allowing currents in only directions flowing out from the DC-DC converters 24A and 24B are added. However, a problem that control becomes complicated or regeneration cannot be performed occurs. Therefore, it is preferable that the third switch 42 be caused to be in a cut-off state in an ordinary state.

In addition, in a case of an ordinary state, the AC-DC converter controller 52 causes the AC-DC converters 32A and 32B to execute torque control, and the DC-DC converter controller 53 causes the DC-DC converters 24A and 24B to execute DC link voltage control.

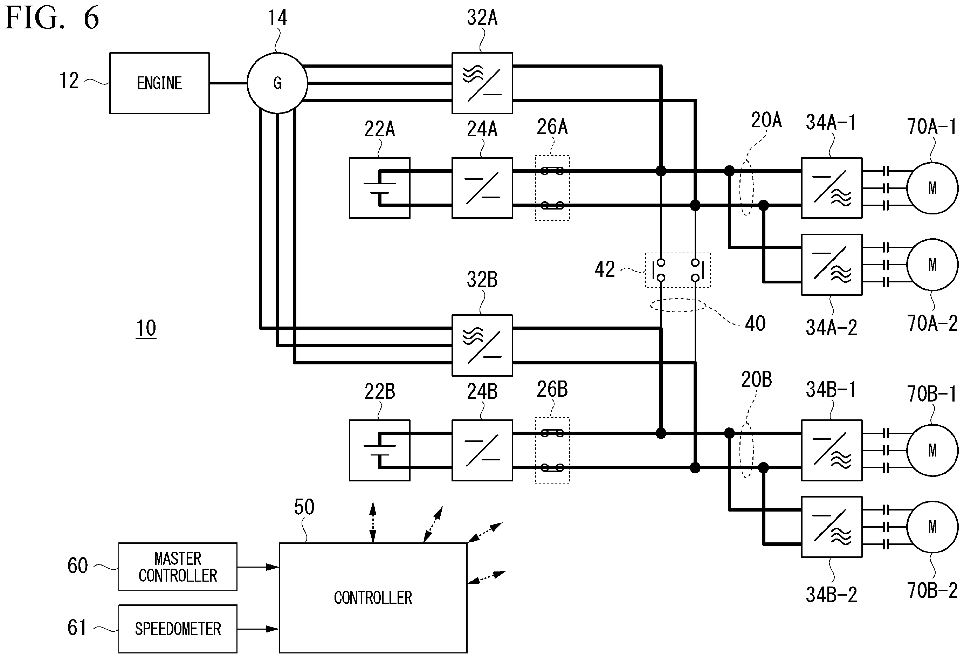

Fig. 6 is a view illustrating an electricity supply path in an ordinary state. In Figs. 6 to 9, a part of the constituent elements is omitted in illustration. In addition, in the diagrams, the electricity supply path is indicated by a bold line. In an ordinary state, the first DC link 20A

and the second DC link 20B are cut off from each other. In addition, in an ordinary state, electricity can be supplied to the first DC link 20A from the generator 14 and the AC-DC converter 32A, and the storage battery unit 22A and the DC-DC converter 24A. Therefore, torque control is performed with respect to the AC-DC converter 32A, and DC link voltage control is performed with respect to the DC-DC converter 24A.

Similarly, in an ordinary state, electricity can be supplied to the second DC link 20B from the generator 14 and the AC-DC converter 32B, and the storage battery unit 22B and the DC-DC converter 24B. Therefore, torque control is performed with respect to the AC-DC converter 32B, and DC link voltage control is performed with respect to the DC-DC converter 24B.

Returning to Fig. 5, when the abnormality determiner 55 determines that an abnormality has occurred in the storage battery unit 22A or the DC-DC converter 24A and no abnormality has occurred in the storage battery unit 22B and the DC-DC converter 24B, the switch controller 56 causes the first switch 26A to be in a cut-off state and causes the second switch 26B and the third switch 42 to be in a conduction state.

In addition, when the abnormality determiner 55 determines that an abnormality has occurred in the storage battery unit 22A or the DC-DC converter 24A and no abnormality has occurred in the storage battery unit 22B and the DC-DC converter 24B, the AC-DC converter controller causes the AC-DC converters 32A and 32B to execute torque control, and the DC-DC converter controller 53 stops the DC-DC converter 24A and causes the DC-DC converter 24B to execute DC link voltage control.

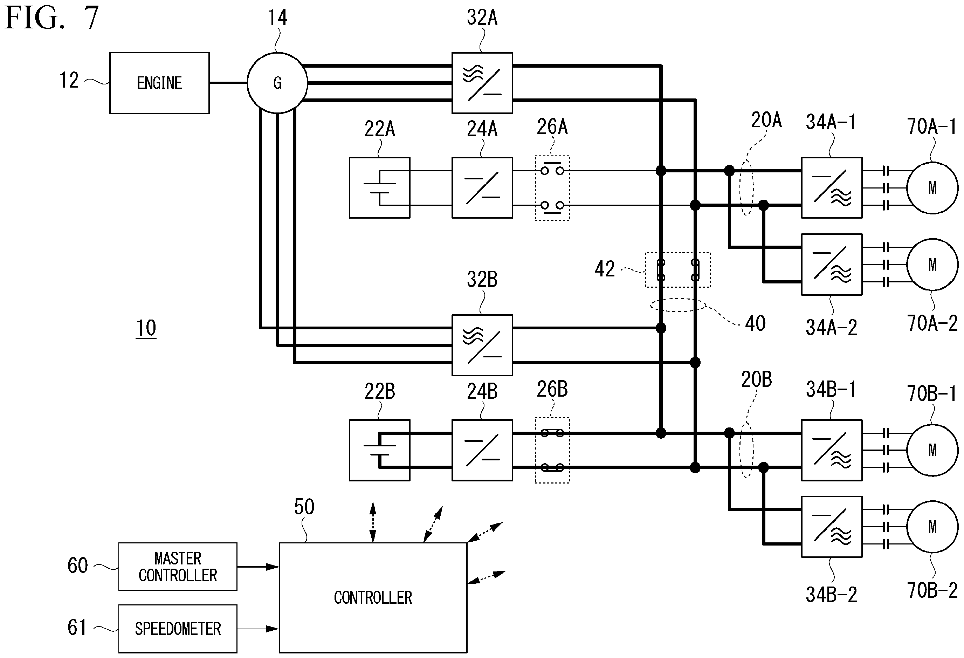

Fig. 7 is a view illustrating an electricity supply path when an abnormality has occurred in the storage battery unit 22A or the DC-DC converter 24A and no abnormality has occurred in the storage battery unit 22B and the DC-DC converter 24B. In this case, the first DC link 20A and the second DC link 20B are conducted, and electricity can be supplied thereto from the generator 14 and the AC-DC converter 32A, the generator 14 and the AC-DC converter 32B, and the storage battery unit 22B and the DC-DC converter 24B. Therefore, torque control is performed with respect to the AC-DC converter 32A and the AC-DC converter 32B, and DC link voltage control is performed with respect to the DC-DC converter 24B.

Returning to Fig. 5, when the abnormality determiner 55 determines that no abnormality has occurred in the storage battery unit 22A and the DC-DC converter 24A and an abnormality has occurred in the storage battery unit 22B or the DC-DC converter 24B, the switch controller 56 causes the first switch 26A to be in a conduction state, causes the second switch 26B to be in a cut-off state, and causes the third switch 42 to be in a conduction state.

In addition, when the abnormality determiner 55 determines that no abnormality has occurred in the storage battery unit 22A or the DC-DC converter 24A and an abnormality has occurred in the storage battery unit 22B and the DC-DC converter 24B, the AC-DC converter controller 52 causes the AC-DC converters 32A and 32B to execute torque control, and the DC-DC converter controller 53 causes the DC-DC converter 24A to execute DC link voltage control and stops the DC-DC converter 24B.

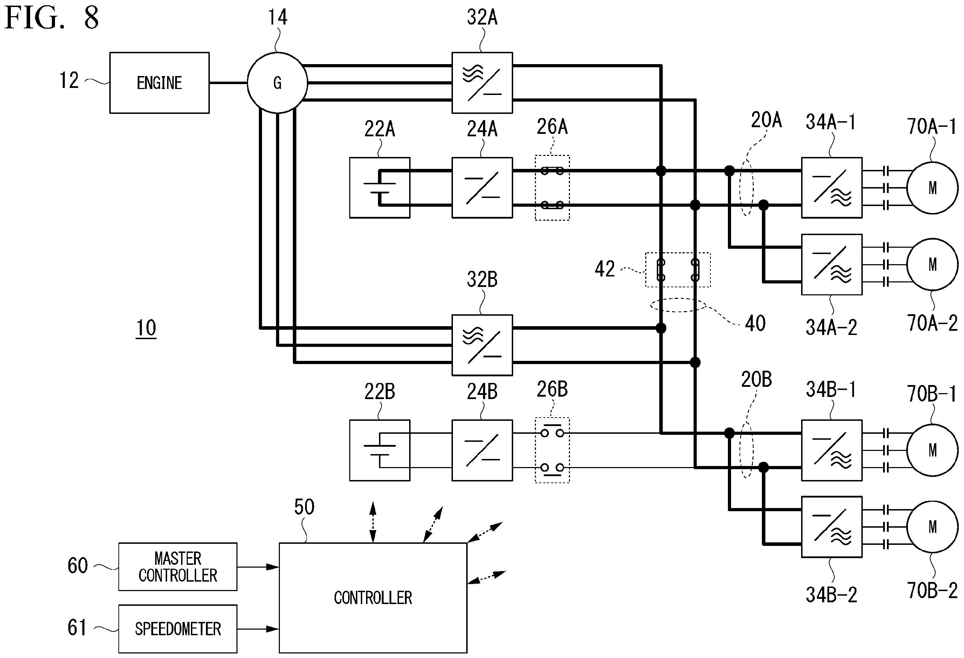

Fig. 8 is a view illustrating an electricity supply path when no abnormality has occurred in the storage battery unit 22A and the DC-DC converter 24A and an abnormality has occurred in the storage battery unit 22B or the DC-DC converter 24B. In this case, the first DC link 20A and the second DC link 20B are conducted to each other, and electricity can be supplied thereto from the generator 14 and the AC-DC converter 32A, the generator 14 and the AC-DC converter 32B, and the storage battery unit 22A and the DC-DC converter 24A. Therefore, torque control is performed with respect to the AC-DC converter 32A and the AC-DC converter 32B, and the DC link voltage control is performed with respect to DC-DC converter 24A.

Returning to Fig. 5, when the abnormality determiner 55 determines that an abnormality has occurred in the storage battery unit 22A or the DC-DC converter 24A and an abnormality has occurred in the storage battery unit 22B or the DC-DC converter 24B, the switch controller 56 causes the first switch 26A, the second switch 26B, and the third switch 42 to be in a cut-off state. In this case as well, similar to the ordinary time, the third switch 42 may be caused to be in a conduction state. However, since a disadvantage of adding a constitution and a function for curbing current imbalance or voltage disturbance is present, it is preferable that the third switch 42 be caused to be in a cut-off state.

In addition, when the abnormality determiner 55 determines that an abnormality has occurred in the storage battery unit 22A or the DC-DC converter 24A and an abnormality has occurred in the storage battery unit 22B or the DC-DC converter 24B, the AC-DC converter controller 52 causes the AC-DC converters 32A and 32B to execute DC link voltage control, and the DC-DC converter controller 53 stops the DC-DC converters 24A and 24B.

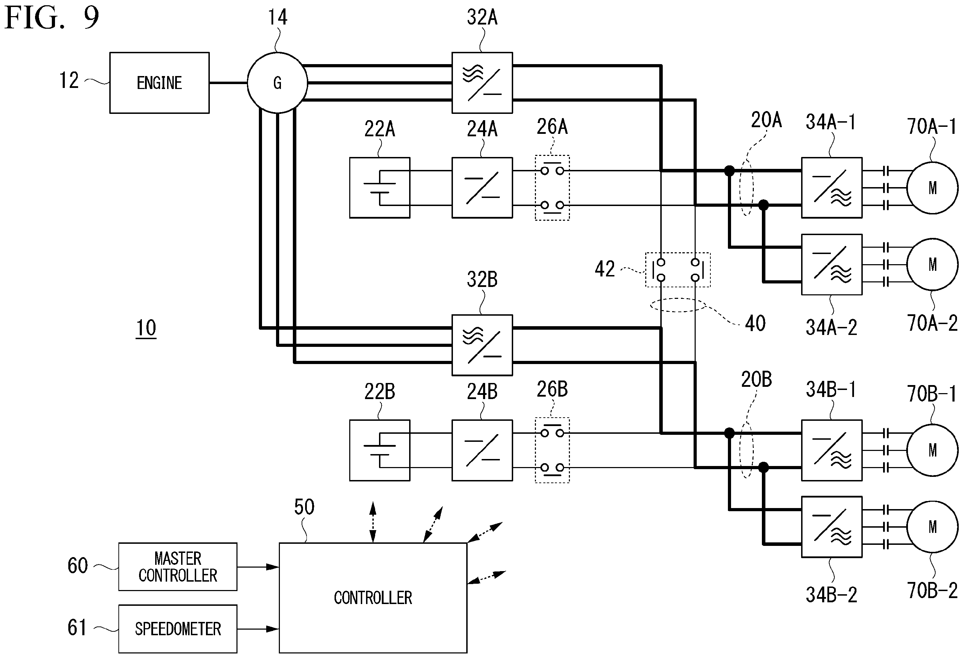

Fig. 9 is a view illustrating an electricity supply path when an abnormality has occurred in the storage battery unit 22A or the DC-DC converter 24A and an abnormality has occurred in the storage battery unit 22B or the DC-DC converter 24B. For example, in this case, the first DC link 20A and the second DC link 20B are cut off from each other. In addition, in this case, electricity can be supplied to the first DC link 20A from the generator 14 and the AC-DC converter 32A, and electricity cannot be supplied from the storage battery unit 22A and the DC-DC converter 24A. Therefore, DC link voltage control is performed with respect to the AC-DC converter 32A. This is performed because there are cases where the motors 70A-1 and 70A-2 cannot be appropriately driven if the voltage of the first DC link 20A significantly fluctuates. Electricity can be supplied to the second DC link 20B from the generator 14 and the AC-DC converter 32B, and electricity cannot be supplied from the storage battery unit 22B and the DC-DC converter 24B. Therefore, DC link voltage control is performed with respect to the AC-DC converter 32B.

[Conclusion]

When a constitution in which the engine 12 and the AC-DC converters 32, and the storage battery units 22 and the DC-DC converters 24 are provided in parallel as in Fig. 2 is employed, the rated value of the engine 12 or the AC-DC converter 32 can be lowered, and the apparatus can be reduced in size and cost. In such a case, target electricity cannot be output with only one of the engine 12 and the AC-DC converters 32, and the storage battery units 22 and the DC-DC converters 24. Therefore, it is conceivable to have a constitution in which target electricity is output by combining both thereof.

In a case of assuming a constitution including no third DC link 40, electricity can be output as described above. However, a function of causing a voltage to approximate the target voltage is stopped, the AC-DC converter 32 has to perform DC link voltage control. Consequently, there are cases where the engine 12 cannot be operated at an operation point at which energy efficiency becomes favorable.

In addition, in a constitution including no third DC link 40 and no third switch 42, when the motors 70 are disposed as illustrated in Fig. 1, in a case where an abnormality has occurred in any one of the storage battery unit 22A, the DC-DC converter 24A, the storage battery unit 22B, and the DC-DC converter 24B, there are cases where a driving force output by a set of the motors 70A-1 and 70A-2 and a driving force output by a set of the motors 70B-1 and 70B-2 differ from each other. As a result, axle load imbalance occurs, and vibration increases. In addition, the degree of difficulty in control performed by the controller 50 increases.

Moreover, when the motors 70 are permanent magnet motors, if the wheels 80 rotate in a state where electricity is not supplied from the DC-AC converter 34, the motors 70 operate as generators, and a reverse voltage is generated. When the contactors 36 are provided, inflow of a reverse voltage to the DC-AC converter 34 side can be avoided. However, in permanent magnet motors, the permanent magnet provided in a rotator is attracted to stator teeth close thereto with an air gap therebetween, thereby generating a resistance force against rotation. Therefore, there are cases where it is difficult to perform movement by towing.

In contrast, the railroad vehicle 1 of the embodiment includes the third DC link 40 and the third switch 42, and when an abnormality has occurred in any one of the storage battery unit 22A, the DC-DC converter 24A, the storage battery unit 22B, and the DC-DC converter 24B, the third switch 42 is controlled such that it is in a conduction state, and the first DC link 20A and the second DC link 20B are conducted. Therefore, a driving force output by the set of the motors 70A-1 and 70A-2 and a driving force output by the set of the motors 70B-1 and 70B-2 can be the same as each other.

In addition, in this case, if one of a set of the storage battery unit 22A and the DC-DC converter 24A and a set of the storage battery unit 22B and the DC-DC converter 24B is normally operated, DC link voltage control can be performed using the set. Therefore, torque control can be performed with respect to the AC-DC converter 32. Therefore, the engine 12 can be operated continuously at an operation point at which energy efficiency becomes favorable.

In addition, in the railroad vehicle 1 of the embodiment, when an abnormality has occurred in the storage battery unit 22A or the DC-DC converter 24A and an abnormality has occurred in the storage battery unit 22B or the DC-DC converter 24B, although there is a possibility that energy efficiency of the engine 12 may deteriorate, shunting action such as movement to a shunting place can be taken by performing DC link voltage control with respect to both the AC-DC converters 32A and 32B.

In addition, in the railroad vehicle 1, it is possible to reduce probability of occurrence of a situation in which the motors 70 turn in a state where electricity is not supplied to the motors 70.

According to the railroad vehicle 1 of the first embodiment described above, when an abnormality of an electrical system occurs, it can further continuously travel.

(Second embodiment)

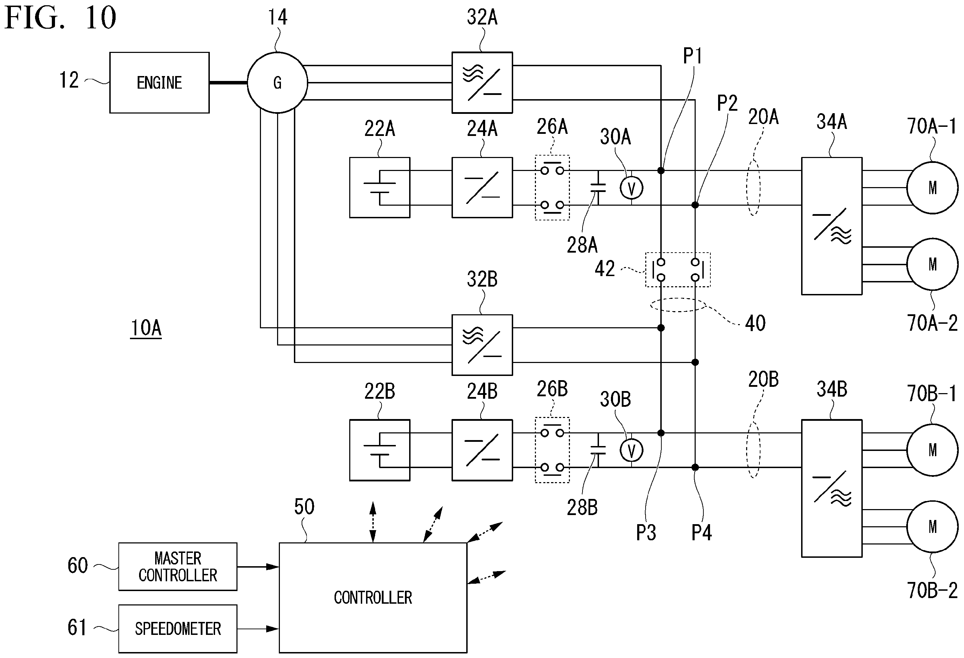

Hereinafter, a second embodiment will be described. In the second embodiment, the motors 70 are induction motors such as synchronous reluctance motors. Fig. 10 is a constitution diagram of a railroad vehicle electricity supply system 10A mounted in a railroad vehicle of the second embodiment. In a case of induction motors, a plurality of motors 70 can be driven with one DC-AC converter 34. In addition, the contactors 36 can be omitted.

(Third embodiment)

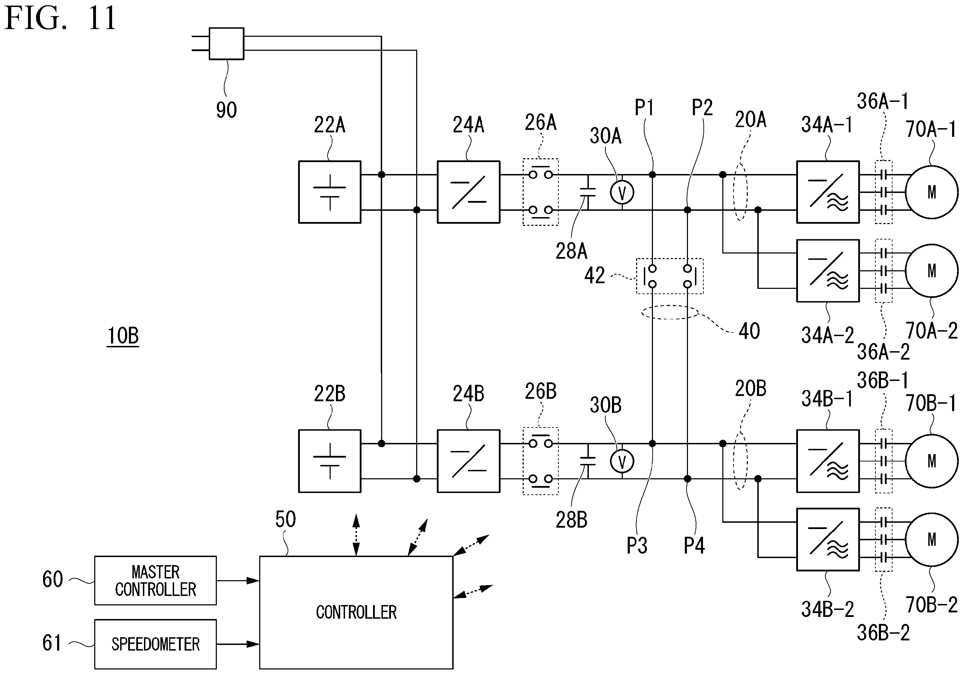

Hereinafter, a third embodiment will be described. The third embodiment has a constitution realized by omitting the engine 12, the generator 14, and the AC-DC converter 32 from the constitution of the first or second embodiment. Fig. 11 is a constitution diagram of a railroad vehicle electricity supply system 10B mounted in a railroad vehicle of the third embodiment. The railroad vehicle electricity supply system 10B may have a constitution in which electricity supply can be received from an external electricity supply apparatus via a plug 90.

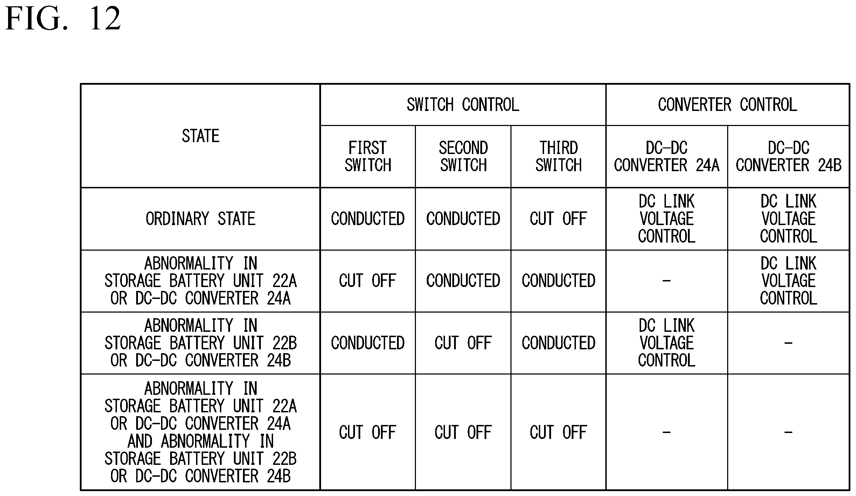

Fig. 12 is a view illustrating details of switch control and converter control for each state based on determination results of the abnormality determiner 55 according to the third embodiment. In a case of an ordinary state, the switch controller 56 causes the first switch 26A and the second switch 26B to be in a conduction state and causes the third switch 42 to be in a cut-off state. In addition, in a case of an ordinary state, the DC-DC converter controller 53 causes the DC-DC converters 24A and 24B to execute DC link voltage control.

When an abnormality has occurred in the storage battery unit 22A or the DC-DC converter 24A and no abnormality has occurred in the storage battery unit 22B and the DC-DC converter 24B, the switch controller 56 causes the first switch 26A to be in a cut-off state and causes the second switch 26B and the third switch 42 to be in a conduction state.

In addition, when an abnormality has occurred in the storage battery unit 22A or the DC-DC converter 24A and no abnormality has occurred in the storage battery unit 22B and the DC-DC converter 24B, the DC-DC converter controller 53 stops the DC-DC converter 24A and causes the DC-DC converter 24B to execute DC link voltage control.

When no abnormality has occurred in the storage battery unit 22A and the DC-DC converter 24A and an abnormality has occurred in the storage battery unit 22B or the DC-DC converter 24B, the switch controller 56 causes the first switch 26A to be in a conduction state, causes the second switch 26B to be in a cut-off state, and causes the third switch 42 to be in a conduction state.

In addition, when no abnormality has occurred in the storage battery unit 22A or the DC-DC converter 24A and an abnormality has occurred in the storage battery unit 22B and the DC-DC converter 24B, the DC-DC converter controller 53 causes the DC-DC converter 24A to execute DC link voltage control and stops the DC-DC converter 24B.

When an abnormality has occurred in the storage battery unit 22A or the DC-DC converter 24A and an abnormality has occurred in the storage battery unit 22B or the DC-DC converter 24B, the switch controller 56 causes the first switch 26A, the second switch 26B, and the third switch 42 to be in a cut-off state.

In addition, when an abnormality has occurred in the storage battery unit 22A or the DC-DC converter 24A and an abnormality has occurred in the storage battery unit 22B or the DC-DC converter 24B, the DC-DC converter controller 53 stops the DC-DC converters 24A and 24B.

(Fourth embodiment)

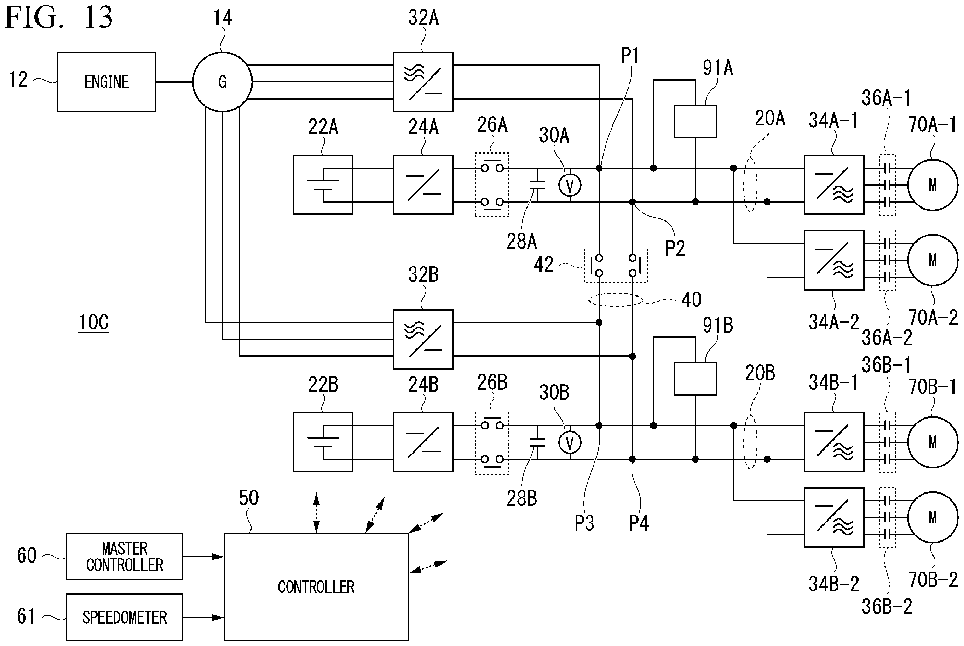

Hereinafter, a fourth embodiment will be described. In the fourth embodiment, compared to the constitutions of the first to third embodiments, a power source apparatus for driving auxiliary machines connected to the DC links is added. Fig. 13 is a constitution diagram of a railroad vehicle electricity supply system 10C mounted in a railroad vehicle according to the fourth embodiment. As illustrated, a power source apparatus 91A is connected to the first DC link 20A and a power source apparatus 91B is connected to the second DC link 20B, respectively. For example, the power source apparatus 91A lowers the voltage of the first DC link 20A and supplies electricity to auxiliary machines such as an air-conditioning apparatus and lighting mounted in the railroad vehicle. For example, the power source apparatus 91B lowers the voltage of the second DC link 20B and supplies electricity to auxiliary machines in the same manner. A power source apparatus may be connected to only one of the first DC link 20A and the second DC link 20B.

According to at least one of the embodiments described above, when no abnormality has occurred in the storage battery unit 22A, the DC-DC converter 24A, the storage battery unit 22B, and the DC-DC converter 24B, the first switch 26A and the second switch 26B are caused to be in a conduction state. When an abnormality has occurred in the storage battery unit 22A or the DC-DC converter 24A, the first switch 26A is caused to be in a cut-off state and the second switch 26B and the third switch 42 are caused to be in a conduction state. When an abnormality has occurred in the storage battery unit 22B or the DC-DC converter 24B, the second switch 26B is caused to be in a cut-off state and the first switch 26A and the third switch 42 are caused to be in a conduction state. Accordingly, when an abnormality of the electrical system occurs, the railroad vehicle can further continuously travel.

Several embodiments of the present invention have been described. However, the embodiments are presented as examples and are not intended to limit the scope of the invention. The embodiments can be implemented in various other forms. The embodiments and modifications thereof are included in the scope of the invention and are similarly included in the invention disclosed in the claims.

**Claims**

1. A railroad vehicle (1) comprising:

    a first storage battery unit (22A);
    a first DC-DC converter (24A) which is connected to the first storage battery unit (22A);
    a first DC-AC converter (34A-1, 34A-2) which converts a direct current into an alternating current;
    a first motor (70A-1, 70A-2) which outputs a driving force to a wheel using an alternating current supplied from the first DC-AC converter (34A-1, 34A-2);
    a first DC link (20A) which connects the first DC-DC converter (24A) and the first DC-AC converter (34A-1, 34A-2) to each other and in which a first switch (26A) is provided;
    a second storage battery unit (22B);

    a second DC-DC converter (24B) which is connected to second storage battery unit (22B);
    a second DC-AC converter (34B-1, 34B-2) which converts a direct current into an alternating current;
    a second motor (70B-1, 70B-2) which outputs a driving force to the wheel using an alternating current supplied from the second DC-AC converter (34B-1, 34B-2); and
    a second DC link (20B) which connects the second DC-DC converter (24B) and the second DC-AC converter (34B-1, 34B-2) to each other and in which a second switch (26B) is provided,
    **characterized by**
    a third DC link (40) which connects a place between the first switch (26A) and the first DC-AC converter (34A-1, 34A-2) in the first DC link (20A) and a place between the second switch (26B) and the second DC-AC converter (34B-1, 34B-2) in the second DC link (20B) and in which a third switch (42) is provided; and
    a controller (50) configured to:

        control the first DC-DC converter (24A) such that a voltage of the first DC link (20A) approximates a target voltage and control the second DC-DC converter (24B) such that a voltage of the second DC link (20B) approximates the target voltage;
        cause the first switch (26A) and the second switch (26B) to be in a conduction state when no abnormality has occurred in the first storage battery unit (22A), the first DC-DC converter (24A), the second storage battery unit (22B), and the second DC-DC converter (24B);
        cause the first switch (26A) to be in a cut-off state and causes the second switch (26B) and the third switch (42) to be in a conduction state when an abnormality has occurred in the first storage battery unit (22A) or the first DC-DC converter (24A); and
        cause the second switch (26B) to be in a cut-off state and causes the first switch (26A) and the third switch (42) to be in a conduction state when an abnormality has occurred in the second storage battery unit (22B) or the second DC-DC converter (24B).

2. The railroad vehicle (1) according to claim 1, wherein the first motor (70A-1, 70A-2) and the second motor (70B-1, 70B-2) are permanent magnet motors.

3. The railroad vehicle (1) according to claim 1 or 2, wherein the controller (50) causes the third switch

(42) to be in a cut-off state when no abnormality has occurred in the first storage battery unit (22A), the first DC-DC converter (24A), the second storage battery unit (22B), and the second DC-DC converter (24B).

4. The railroad vehicle (1) according to claim 1, further comprising:

> a first AC-DC converter (32A) which is connected to the first DC link (20A), converts an alternating current supplied from a generator (14) into a direct current, and outputs the converted current to the first DC link (20A); and
> a second AC-DC converter (32B) which is connected to the second DC link (20B), converts an alternating current supplied from the generator (14) into a direct current, and outputs the converted current to the second DC link (20B),
> wherein the controller (50) causes the first switch (26A) and the second switch (26B) to be in a cut-off state when an abnormality has occurred in the first storage battery unit (22A) or the first DC-DC converter (24A) and an abnormality has occurred in the second storage battery unit (22B) or the second DC-DC converter (24B).

5. The railroad vehicle (1) according to claim 4, wherein the controller (50) operates at least one of a first AD converter and a second AD converter such that voltages of the first DC link (20A) and the second DC link (20B) approximate the target voltage when an abnormality has occurred in the first storage battery unit (22A) or the first DC-DC converter (24A) and an abnormality has occurred in the second storage battery unit (22B) or the second DC-DC converter (24B).

6. The railroad vehicle (1) according to claim 5,

> wherein the generator (14) generates electricity utilizing power output by an internal combustion engine, and
> wherein the controller (50) causes the first AD converter and the second AD converter to output a torque for operating the internal combustion engine at an operation point at which energy efficiency becomes favorable when both the first storage battery unit (22A) and the first DC-DC converter (24A) are in a normal state or both the second storage battery unit (22B) and the second DC-DC converter (24B) are in a normal state.

7. The railroad vehicle (1) according to claim 4, wherein the controller (50) causes the third switch (42) to be in a cut-off state when an abnormality has occurred in the first storage battery unit (22A) or the first DC-DC converter (24A) and an abnormality has occurred in the second storage battery unit (22B) or the second DC-DC converter (24B).

**Patentansprüche**

1. Schienenfahrzeug (1), umfassend:

> eine erste Speicherbatterieeinheit (22A);
> einen ersten Gleichstrom-Gleichstrom-Wandler (24A), der mit der ersten Speicherbatterieeinheit (22A) verbunden ist;
> einen ersten Gleichstrom-Wechselstrom-Wandler (34A-1, 34A-2), der einen Gleichstrom in einen Wechselstrom umwandelt;
> einen ersten Motor (70A-1, 70A-2), der unter Verwendung eines Wechselstroms, der von dem ersten Gleichstrom-Wechselstrom-Wandler (34A-1, 34A-2) geliefert wird, eine Antriebskraft an ein Rad abgibt;
> eine erste Gleichstromverbindung (20A), die den ersten Gleichstrom-Gleichstrom-Wandler (24A) und den ersten Gleichstrom-Wechselstrom-Wandler (34A-1, 34A-2) miteinander verbindet und in der ein erster Schalter (26A) bereitgestellt ist;
> eine zweite Speicherbatterieeinheit (22B);
> einen zweiten Gleichstrom-Gleichstrom-Wandler (24B), der mit der zweiten Speicherbatterieeinheit (22B) verbunden ist;
> einen zweiten Gleichstrom-Wechselstrom-Wandler (34B-1, 34B-2), der einen Gleichstrom in einen Wechselstrom umwandelt;
> einen zweiten Motor (70B-1, 70B-2), der unter Verwendung eines Wechselstroms, der von dem zweiten Gleichstrom-Wechselstrom-Wandler (34B-1, 34B-2) geliefert wird, eine Antriebskraft an das Rad abgibt; und
> eine zweite Gleichstromverbindung (20B), die den zweiten Gleichstrom-Gleichstrom-Wandler (24B) und den zweiten Gleichstrom-Wechselstrom-Wandler (34B-1, 34B-2) miteinander verbindet und in der ein zweiter Schalter (26B) bereitgestellt ist,
> **gekennzeichnet durch**
> eine dritte Gleichstromverbindung (40), die einen Ort zwischen dem ersten Schalter (26A) und dem ersten Gleichstrom-Wechselstrom-Wandler (34A-1, 34A-2) in der ersten Gleichstromverbindung (20A) und einen Ort zwischen dem zweiten Schalter (26B) und dem zweiten Gleichstrom-Wechselstrom-Wandler (34B-1, 34B-2) in der zweiten Gleichstromverbindung (20B) verbindet und in der ein dritter Schalter (42) bereitgestellt ist; und
> eine Steuereinrichtung (50), die ausgestaltet ist zum:

Steuern des ersten Gleichstrom-Gleichstrom-Wandlers (24A), derart, dass eine Spannung der ersten Gleichstromverbindung (20A) sich an eine Zielspannung annähert, und Steuern des zweiten Gleichstrom-Gleichstrom-Wandlers (24B), derart dass eine Spannung der zweiten Gleichstromverbindung (20B) sich an die Zielspannung annähert;

Bewirken, dass der erste Schalter (26A) und der zweite Schalter (26B) sich in einem Leitungszustand befinden, wenn keine Anomalie in der ersten Speicherbatterieeinheit (22A), dem ersten Gleichstrom-Gleichstrom-Wandler (24A), der zweiten Speicherbatterieeinheit (22B) und dem zweiten Gleichstrom-Gleichstrom-Wandler (24B) aufgetreten ist;

Bewirken, dass der erste Schalter (26A) sich in einem ausgeschalteten Zustand befindet und bewirkt, dass der zweite Schalter (26B) und der dritte Schalter (42) sich in einem Leitungszustand befinden, wenn eine Anomalie in der ersten Speicherbatterieeinheit (22A) oder dem ersten Gleichstrom-Gleichstrom-Wandler (24A) aufgetreten ist; und

Bewirken, dass der zweite Schalter (26B) sich in einem ausgeschalteten Zustand befindet und bewirkt, dass der erste Schalter (26A) und der dritte Schalter (42) sich in einem Leitungszustand befinden, wenn eine Anomalie in der zweiten Speicherbatterieeinheit (22B) oder dem zweiten Gleichstrom-Gleichstrom-Wandler (24B) aufgetreten ist.

2. Schienenfahrzeug (1) nach Anspruch 1, wobei der erste Motor (70A-1, 70A-2) und der zweite Motor (70B-1, 70B-2) Permanentmagnetmotoren sind.

3. Schienenfahrzeug (1) nach Anspruch 1 oder 2, wobei die Steuereinrichtung (50) bewirkt, dass der dritte Schalter (42) sich in einem ausgeschalteten Zustand befindet, wenn keine Anomalie in der ersten Speicherbatterieeinheit (22A), dem ersten Gleichstrom-Gleichstrom-Wandler (24A), der zweiten Speicherbatterieeinheit (22B) und dem zweiten Gleichstrom-Gleichstrom-Wandler (24B) aufgetreten ist.

4. Schienenfahrzeug (1) nach Anspruch 1, ferner umfassend:

einen ersten Wechselstrom-Gleichstrom-Wandler (32A), der mit der ersten Gleichstromverbindung (20A) verbunden ist, einen Wechselstrom, der von einem Generator (14) geliefert wird, in einen Gleichstrom umwandelt und den umgewandelten Strom an die erste Gleichstromverbindung (20A) abgibt; und

einen zweiten Wechselstrom-Gleichstrom-Wandler (32B), der mit der zweiten Gleichstromverbindung (20B) verbunden ist, einen Wechselstrom, der von dem Generator (14) geliefert wird, in einen Gleichstrom umwandelt und den umgewandelten Strom an die zweite Gleichstromverbindung (20B) abgibt,

wobei die Steuereinrichtung (50) bewirkt, dass der erste Schalter (26A) und der zweite Schalter (26B) sich in einem ausgeschalteten Zustand befinden, wenn eine Anomalie in der ersten Speicherbatterieeinheit (22A) oder dem ersten Gleichstrom-Gleichstrom-Wandler (24A) aufgetreten ist und eine Anomalie in der zweiten Speicherbatterieeinheit (22B) oder dem zweiten Gleichstrom-Gleichstrom-Wandler (24B) aufgetreten ist.

5. Schienenfahrzeug (1) nach Anspruch 4, wobei die Steuereinrichtung (50) mindestens einen von einem ersten Wechselstromwandler und einem zweiten Wechselstromwandler derart betreibt, dass Spannungen der ersten Gleichstromverbindung (20A) und der zweiten Gleichstromverbindung (20B) sich an die Zielspannung annähern, wenn eine Anomalie in der ersten Speicherbatterieeinheit (22A) oder dem ersten Gleichstrom-Gleichstrom-Wandler (24A) aufgetreten ist und eine Anomalie in der zweiten Speicherbatterieeinheit (22B) oder dem zweiten Gleichstrom-Gleichstrom-Wandler (24B) aufgetreten ist.

6. Schienenfahrzeug (1) nach Anspruch 5,

wobei der Generator (14) unter Verwendung von Leistung, die von einem Verbrennungsmotor abgegeben wird, Strom erzeugt, und

wobei die Steuereinrichtung (50) bewirkt, dass der erste Wechselstromwandler und der zweite Wechselstromwandler ein Drehmoment zum Betreiben des Verbrennungsmotors an einem Betriebspunkt abgibt, an dem Energieeffizienz vorteilhaft wird, wenn sowohl die erste Speicherbatterieeinheit (22A) als auch der erste Gleichstrom-Gleichstrom-Wandler (24A) sich in einem normalen Zustand befinden oder sowohl die zweite Speicherbatterieeinheit (22B) als auch der zweite Gleichstrom-Gleichstrom-Wandler (24B) sich in einem normalen Zustand befinden.

7. Schienenfahrzeug (1) nach Anspruch 4, wobei die Steuereinrichtung (50) bewirkt, dass der dritte Schalter (42) sich in einem ausgeschalteten Zustand befindet, wenn eine Anomalie in der ersten Speicherbatterieeinheit (22A) oder dem ersten Gleichstrom-Gleichstrom-Wandler (24A) aufgetreten ist und eine Anomalie in der zweiten Speicherbatterieeinheit (22B) oder dem zweiten Gleichstrom-Gleichstrom-Wandler (24B) aufgetreten ist.

**Revendications**

1. Véhicule ferroviaire (1) comprenant :

   une première unité de batterie de stockage (22A) ;
   un premier convertisseur CC-CC (24A) qui est relié à la première unité de batterie de stockage (22A) ;
   un premier convertisseur CC-CA (34A-1, 34A-2) qui convertit un courant continu en un courant alternatif ;
   un premier moteur (70A-1, 70A-2) qui délivre une force motrice à une roue à l'aide d'un courant alternatif fourni depuis le premier convertisseur CC-CA (34A-1, 34A-2) ;
   une première liaison CC (20A) qui relie le premier convertisseur CC-CC (24A) et le premier convertisseur CC-CA (34A-1, 34A-2) l'un à l'autre et dans lequel un premier commutateur (26A) est prévu ;
   une deuxième unité de batterie de stockage (22B) ;
   un deuxième convertisseur CC-CC (24B) qui est relié à la deuxième unité de batterie de stockage (22B) ;
   un deuxième convertisseur CC-CA (34B-1, 34B-2) qui convertit un courant continu en un courant alternatif ;
   un deuxième moteur (70B-1, 70B-2) qui délivre une force motrice à la roue à l'aide d'un courant alternatif fourni depuis le deuxième convertisseur CC-CA (34B-1, 34B-2) ; et
   une deuxième liaison CC (20B) qui relie le deuxième convertisseur CC-CC (24B) et le deuxième convertisseur CC-CA (34B-1, 34B-2) l'un à l'autre et dans lequel un deuxième commutateur (26B) est prévu ;
   **caractérisé par**
   une troisième liaison CC (40) qui relie un emplacement entre le premier commutateur (26A) et le premier convertisseur CC-CA (34A-1, 34A-2) dans la première liaison CC (20A) et un emplacement entre le deuxième commutateur (26B) et le deuxième convertisseur CC-CA (34B-1, 34B-2) dans la deuxième liaison CC (20B) et dans lequel un troisième commutateur (42) est prévu ; et
   un dispositif de commande (50) configuré pour :

   commander le premier convertisseur CC-CC (24A) de sorte qu'une tension de la première liaison CC (20A) soit approximativement égale à une tension cible et commander le deuxième convertisseur CC-CC (24B) de sorte qu'une tension de la deuxième liaison CC (20B) soit approximativement égale à la tension cible ;
   amener le premier commutateur (26A) et le deuxième commutateur (26B) à être dans un état de conduction lorsque aucune anomalie ne s'est produite dans la première unité de batterie de stockage (22A), le premier convertisseur CC-CC (24A), la deuxième unité de batterie de stockage (22B) et le deuxième convertisseur CC-CC (24B) ;
   amener le premier commutateur (26A) à être dans un état de coupure et amener le deuxième commutateur (26B) et le troisième commutateur (42) à être dans un état de conduction lorsqu'une anomalie s'est produite dans la première unité de batterie de stockage (22A) ou dans le premier convertisseur CC-CC (24A) ; et
   amener le deuxième commutateur (26B) à être dans un état de coupure et amener le premier commutateur (26A) et le troisième commutateur (42) à être dans un état de conduction lorsqu'une anomalie s'est produite dans la deuxième unité de batterie de stockage (22B) ou dans le deuxième convertisseur CC-CC (24B).

2. Véhicule ferroviaire (1) selon la revendication 1, dans lequel le premier moteur (70A-1, 70A-2) et le deuxième moteur (70B-1, 70B-2) sont des moteurs à aimants permanents.

3. Véhicule ferroviaire (1) selon la revendication 1 ou 2, dans lequel le dispositif de commande (50) amène le troisième commutateur (42) à être dans un état de coupure lorsque aucune anomalie ne s'est produite dans la première unité de batterie de stockage (22A), le premier convertisseur CC-CC (24A), la deuxième unité de batterie de stockage (22B) et le deuxième convertisseur CC-CC (24B).

4. Véhicule ferroviaire (1) selon la revendication 1, comprenant en outre :

   un premier convertisseur CA-CC (32A) qui est relié à la première liaison CC (20A), convertit un courant alternatif fourni depuis un générateur (14) en un courant continu, et délivre le courant converti à la première liaison CC (20A) ; et
   un deuxième convertisseur CA-CC (32B) qui est relié à la deuxième liaison CC (20B), convertit un courant alternatif fourni depuis le générateur (14) en un courant continu, et délivre le courant converti à la deuxième liaison CC (20B),
dans lequel le dispositif de commande (50) amène le premier commutateur (26A) et le deuxième commutateur (26B) à être dans un état de coupure lorsqu'une anomalie s'est produite dans la première unité de batterie de stockage (22A) ou le premier convertisseur CC-CC (24A) et une anomalie s'est produite dans la deuxième unité de batterie de stockage (22B) ou le deuxième convertisseur CC-CC (24B).

5. Véhicule ferroviaire (1) selon la revendication 4, dans lequel le dispositif de commande (50) fait fonctionner au moins l'un d'un premier convertisseur AD et d'un deuxième convertisseur AD de sorte que des tensions de la première liaison CC (20A) et de la deuxième liaison CC (20B) soient approximativement égales à la tension cible lorsqu'une anomalie s'est produite dans la première unité de batterie de stockage (22A) ou le premier convertisseur CC-CC (24A) et une anomalie s'est produite dans la deuxième unité de batterie de stockage (22B) ou le deuxième convertisseur CC-CC (24B).

6. Véhicule ferroviaire (1) selon la revendication 5,

dans lequel le générateur (14) génère de l'électricité en utilisant une puissance délivrée par un moteur à combustion interne, et
dans lequel le dispositif de commande (50) amène le premier convertisseur AD et le deuxième convertisseur AD à délivrer un couple pour faire fonctionner le moteur à combustion interne à un point de fonctionnement auquel un rendement énergétique devient favorable lorsqu'à la fois la première unité de batterie de stockage (22A) et le premier convertisseur CC-CC (24A) sont dans un état normal ou à la fois la deuxième unité de batterie de stockage (22B) et le deuxième convertisseur CC-CC (24B) sont dans un état normal.

7. Véhicule ferroviaire (1) selon la revendication 4, dans lequel le dispositif de commande (50) amène le troisième commutateur (42) à être dans un état de coupure lorsqu'une anomalie s'est produite dans la première unité de batterie de stockage (22A) ou le premier convertisseur CC-CC (24A) et une anomalie s'est produite dans la deuxième unité de batterie de stockage (22B) ou le deuxième convertisseur CC-CC (24B).

## FIG. 1

1

10

RAILROAD VEHICLE
ELECTRICITY SUPPLY SYSTEM

M    M          M    M

80-1  70A-1    80-2      80-3  70B-1    80-4

70A-2      90        70B-2

FIG. 2

# FIG. 3

<u>50</u>

51 — ENGINE OUTPUT COMPUTATION UNIT

52 — AC–DC CONVERTER CONTROLLER

53 — DC–DC CONVERTER CONTROLLER

54 — DC–AC CONVERTER CONTROLLER

55 — ABNORMALITY DETERMINER

56 — SWITCH CONTROLLER

# FIG. 4

# FIG. 5

| STATE | SWITCH CONTROL | | | CONVERTER CONTROL | | | |
|---|---|---|---|---|---|---|---|
| | FIRST SWITCH | SECOND SWITCH | THIRD SWITCH | AC-DC CONVERTER 32A | AC-DC CONVERTER 32B | DC-DC CONVERTER 24A | DC-DC CONVERTER 24B |
| ORDINARY STATE | CONDUCTED | CONDUCTED | CUT OFF | TORQUE CONTROL | TORQUE CONTROL | DC LINK VOLTAGE CONTROL | DC LINK VOLTAGE CONTROL |
| ABNORMALITY IN STORAGE BATTERY UNIT 22A OR DC-DC CONVERTER 24A | CUT OFF | CONDUCTED | CONDUCTED | TORQUE CONTROL | TORQUE CONTROL | – | DC LINK VOLTAGE CONTROL |
| ABNORMALITY IN STORAGE BATTERY UNIT 22B OR DC-DC CONVERTER 24B | CONDUCTED | CUT OFF | CONDUCTED | TORQUE CONTROL | TORQUE CONTROL | DC LINK VOLTAGE CONTROL | – |
| ABNORMALITY IN STORAGE BATTERY UNIT 22A OR DC-DC CONVERTER 24A AND ABNORMALITY IN STORAGE BATTERY UNIT 22B OR DC-DC CONVERTER 24B | CUT OFF | CUT OFF | CUT OFF | DC LINK VOLTAGE CONTROL | DC LINK VOLTAGE CONTROL | – | – |

EP 3 640 075 B1

# FIG. 6

EP 3 640 075 B1

# FIG. 7

EP 3 640 075 B1

FIG. 8

FIG. 9

EP 3 640 075 B1

FIG. 10

EP 3 640 075 B1

FIG. 11

10B

MASTER CONTROLLER 60

SPEEDOMETER 61

CONTROLLER 50

FIG. 12

| STATE | SWITCH CONTROL | | | CONVERTER CONTROL | |
|---|---|---|---|---|---|
| | FIRST SWITCH | SECOND SWITCH | THIRD SWITCH | DC-DC CONVERTER 24A | DC-DC CONVERTER 24B |
| ORDINARY STATE | CONDUCTED | CONDUCTED | CUT OFF | DC LINK VOLTAGE CONTROL | DC LINK VOLTAGE CONTROL |
| ABNORMALITY IN STORAGE BATTERY UNIT 22A OR DC-DC CONVERTER 24A | CUT OFF | CONDUCTED | CONDUCTED | - | DC LINK VOLTAGE CONTROL |
| ABNORMALITY IN STORAGE BATTERY UNIT 22B OR DC-DC CONVERTER 24B | CONDUCTED | CUT OFF | CONDUCTED | DC LINK VOLTAGE CONTROL | - |
| ABNORMALITY IN STORAGE BATTERY UNIT 22A OR DC-DC CONVERTER 24A AND ABNORMALITY IN STORAGE BATTERY UNIT 22B OR DC-DC CONVERTER 24B | CUT OFF | CUT OFF | CUT OFF | - | - |

EP 3 640 075 B1

# FIG. 13

EP 3 640 075 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2883740 A
- JP 2014090554 A
- JP 2014091504 A